# EUROPEAN PATENT SPECIFICATION

(11) **EP 3 119 594 B1**
(45) Date of publication and mention of the grant of the patent: **14.08.2019**
(21) Application number: 15715491.5
(22) Date of filing: 16.03.2015
(51) Int. Cl.: B29C 70/88, B29C 65/48, B29C 65/50, B29C 65/00, F16B 11/00, B32B 7/12, B32B 15/08, B32B 15/09, B32B 15/092, B32B 15/098, B32B 15/20, B32B 27/36, B32B 27/38, B32B 27/42, B32B 1/04

(54) **LAMINATE OF MUTUALLY BONDED ADHESIVE LAYERS AND METAL SHEETS, AND METHOD TO OBTAIN SUCH LAMINATE**
LAMINAT AUS GEGENSEITIG VERKLEBTEN HAFTSCHICHTEN UND METALLBLECHEN UND VERFAHREN ZUR GEWINNUNG EINES DERARTIGEN LAMINATS
STRATIFIÉ DE COUCHES ADHÉSIVES MUTUELLEMENT RELIÉES, FEUILLES MÉTALLIQUES ET PROCÉDÉ D'OBTENTION DU STRATIFIÉ

(30) Priority: 17.03.2014 NL 2012458
(43) Date of publication of application: 25.01.2017
(73) Proprietor: GTM-Advanced Products B.V., 2497 GB 's-Gravenhage (NL)
(72) Inventor: GUNNINK, Jan Willem, 2911 BB Nieuwerkerk aan den IJssel (NL); GUNNINK, Simon, 2624 BK Delft (NL)
(74) Representative: Brouwer, Hendrik Rogier
(86) International application number: PCT/NL2015/050169
(87) International publication number: WO 2015/142170

(56) References cited:
- WO-A1-2005/032805
- US-A- 5 429 326
- US-A- 5 951 800
- US-A1- 2012 045 606

## Description

### FIELD OF THE INVENTION

The invention relates to a laminate of mutually bonded adhesive layers and metal sheets with abutting and/or overlapping metal sheet edges, extending along a length direction within a splicing region of the laminate. The invention further relates to a method for obtaining such a laminate.

### BACKGROUND ART

Laminates of mutually bonded adhesive layers and metal sheets are used for structural purposes, for instance in the aircraft industry. In order to obtain large panels of such laminates, and because metal sheets are available in limited widths only, typical laminates comprise abutting and/or overlapping metal sheet edges, extending along a length direction within a splicing region of the laminate.

A laminate comprising a splicing region is for instance known from US 5,429,326, which discloses a laminated body panel for aircraft applications. The panel comprises at least two metal layers with a typical thickness of 0.3 mm, and an adhesive layer provided in between the metal layers. Some metal layers are composed of two or more metal sheets which are generally disposed coplanar in a layer and separated by a splice or splice line extending in a length direction of the laminate. Splices in a metal layer are typically staggered with respect to splices provided in other metal layers in order to prevent the laminate from weakening too much. Using splices in a laminate no longer restricts the maximum width of a laminate to a metal sheet width that is limited by present day metal sheet manufacturing technology.

In some laminates, the splice region of the laminate is covered with a splice strap or doubler to prevent exposure of the splices to environmental conditions, and to strengthen the laminate in a direction transverse to the length direction of the laminate.

The known laminate may suffer from internal stresses, for instance induced by their manufacturing process. The internal stresses may negatively affect strength and fatigue life of the laminate, which strength and fatigue life are an important design parameter, in particular for aircraft structures. The negative effects on strength and fatigue life may be worsened in laminates having relatively thick and/or stiff metal layers, in particular exceeding 0.3 mm for aluminum layers, and /or at relatively low temperatures below 0°C and lower.

It is an object of the present invention to provide a laminate with an adequate strength and improved fatigue behavior, as well as a method for manufacturing such a laminate.

### SUMMARY OF THE INVENTION

This and other objects are achieved by providing a laminate comprising a stack of mutually bonded adhesive layers and metal sheets, the laminate comprising abutting and/or overlapping metal sheet edges, extending along a length direction within a splicing region, wherein a splice strap is bonded to the laminate at an outer surface of the laminate and extends in the length direction across said splicing region, the splice strap having a smaller thickness than a thickness of a metal sheet, positioned adjacent to the splice strap in the stack. It has turned out that by providing the spliced laminate with a relatively thin splice strap improves fatigue life, probably by decreasing stress concentrations at critical locations in the laminate.

An improved fatigue life, in the context of the present application means a larger number of load cycles up to failure at a certain load. The splicing region in the laminate is defined as that region of the laminate wherein splice lines between abutting metal sheets and/or overlapping edge parts of metal sheets occur. The splicing region in a transverse direction (perpendicular to the length direction) of the laminate extends across abutting edges of metal sheets or across at least one edge of a metal sheet that overlaps with another metal sheet. The adhesive layer between metal sheets is preferably continuous through the splicing region and therefore bridges splice lines and the like. The adjacent metal sheet is the metal sheet positioned next to the splice strap within the stack in the thickness direction, the thickness direction extending perpendicular to the plane formed by the length and transverse directions. The wording 'substantially' in the context of the present inventions means at least 90% of the indicated variable or subject. The splice strap extends across the splicing region, by which is meant that the width of the splice strap covers the width of the splicing region or a part of the width of the splicing region.

Bonding of the splice strap to the laminate may be achieved by any adhesive, including the same adhesive as that used in the adhesive layers of the laminate. The strap bonding adhesive layer may be provided with reinforcing fibers, if desired. The reinforcing fibers in an embodiment have a smaller length than the width of the strap. This creates at each end of the strap an adhesive bonded region which is preferably larger than 5 times the thickness of the thinnest adjacent metal sheet and more preferably larger than 10 times said thickness. This may enhance the peel resistance of the edge of the strap significantly.

Another embodiment comprises reinforcing fibers having a larger length than the width of the strap, which promoters a smooth load introduction to the strap. The length of the reinforcing fibers is preferably such that they extend at each side of the strap by a length of at least 5 times the thickness of the strap and more preferably larger than 10 times the thickness of the strap.

In an embodiment of the laminate according to the invention the splice strap thickness is less than 90% of said adjacent metal sheet thickness, and more preferably ranges from 10% to 75% of said adjacent metal sheet thickness, even more preferably from 20 to 60 % of said adjacent metal sheet thickness. In an embodiment wherein the metal sheet thickness in the laminate is 0.4 mm, the thickness of the splice strap ranges from 0.04 to 0.3mm in a preferred embodiment.

In useful embodiments, the thickness of the splice strap is defined as the total thickness of the splice strap. When referring to the thickness of a splice strap, metal sheet or adhesive layer, a constant thickness is generally understood. However, splice straps, metal sheets and/or adhesive layers may be tapered for instance, in which case the thickness means the average thickness across the splicing region.

The splice strap extends in the transverse direction of the laminate across at least a part of the splicing region. However, in some embodiments, the splice strap may extend across the splicing region or even beyond the splicing region. In further embodiments, the splice strap may even extend in the transverse direction of the laminate over substantially the complete laminate width.

Another embodiment of the invention provides a laminate wherein an outer surface of the splice strap protrudes from the outer surface of the laminate by an off-set thickness ranging from 0% to more than 100% of the splice strap thickness. When the off-set thickness is 0 (zero), the splice strap is embedded in the laminate and a substantially smooth outer surface of the laminate ensues. In embodiments having a non-zero off-set thickness, the splice strap protrudes from an outer surface of the laminate in the splicing region and a discontinuous outer surface of the laminate ensues in the splicing region. This will in particular embodiments provide a ridge that extends in the length direction of the laminate. In an embodiment wherein the off-set thickness differs from zero, the thickness of the splice strap is defined as the largest off-set thickness occurring. In such embodiments therefore the actual thickness of the splice strap may be larger than or as large as the adjacent metal sheet thickness.

Another embodiment of the invention provides a laminate wherein the off-set thickness ranges from 10% to 60% of the splice strap thickness. In an embodiment wherein the metal sheet thickness in the laminate is 0.3 mm, the off-set thickness of the splice strap ranges from 0.003 to 0.18 mm in a preferred embodiment. It has turned out that an off-set thickness of 0.1 mm at most is particularly preferred.

An improved embodiment of the invention relates to a laminate that further comprises a bonded second splice strap extending in the length direction across said splicing region and positioned within the stack. The thickness of the second splice strap is not subject to any limitation, but the sum of the first and second splice strap thicknesses is preferably at most 120% of the thickness of the metal sheets in the laminate, and, in a more preferred embodiment less or equal to the thickness of said adjacent metal sheet.

A preferred embodiment provides a laminate wherein the second splice strap is positioned adjacent to said adjacent metal sheet and at a side of said adjacent metal sheet that is opposite to the outer surface of the laminate carrying the splice strap.

The splice strap in useful embodiments comprises a metal strip, for instance made from the same metal as the laminate metal sheets. In accordance with another embodiment of the invention, a laminate is provided wherein the splice strap comprises stacked splice strap layers, preferably of fiber-reinforced adhesive, more preferably of metal sheets and most preferably of a combination of metal sheets and fibre-reinforced adhesive for which the first layer of the strap adjacent to the laminate is having a thickness less than the adjacent outer metal layer of the laminate, more preferably that the average thickness of the stacked splice strap is less than the thickness of the adjacent outer metal sheet of the laminate. The stacking sequence of the splice strap can be provided outside-in or, preferably, inside-out; meaning respectively that the smallest layer is adjacent to the laminate, or the widest strap layer is adjacent to the laminate

A particularly useful embodiment offers a laminate wherein the splice strap layers each have a width across the splicing region and the width of the layers decreases in the thickness direction of the laminate from the outer laminate surface towards an inner laminate surface.

The laminate according to the invention in some embodiments needs to accommodate a splice strap and/or overlapping metal sheet edges in the thickness direction. In order to provide a smooth continuous outer surface of the laminate, some metal sheets need to have a lower thickness or need to be deformed. A useful embodiment of the invention therefore provides a laminate wherein the splicing region comprises deformed metal sheets. A method in which the metal sheets are deformed will be described further below.

In embodiments wherein the splice strap extends substantially parallel to the length direction of the laminate, the deformed metal sheets are preferably bend along a line parallel to the length direction.

Deforming metal sheets in the laminate may produce a laminate wherein, in an embodiment, the outer surface of the laminate is substantially smooth and a second outer surface opposite said outer surface is curved. The outer surface is then typically used as outbound surface of an aircraft component for instance, whereas the curved second outer surface is used as inbound surface of the aircraft component. The inbound surface may typically be covered with interior cladding and the like.

The adhesive layers in the laminate of the invention may be used as such. Preferred embodiments of the invention however provide a laminate wherein the adhesive layers comprise reinforcing fibers to form a fiber-metal laminate.

The laminates according to the present invention preferably comprise from 2 to 20 metal layers and about 1 to 19 adhesive layers. The metal layers may have any thickness such as the relatively thin metal layers of the prior art spliced laminates. Metal sheet thicknesses of between 0.1 and 0.5 mm may be used. The metal sheets in the present invention preferably have a thickness of more than 0.2 mm, more preferably more than 0.6 mm, and most preferably more than 1.0 mm

The metal sheets are preferably made from a metal having a tensile strength of more than 200 MPa. Examples of suitable metals are aluminum alloys, steel alloys, titanium alloys, copper alloys, magnesium alloys, and aluminum matrix composites. Aluminum-copper alloys of the AA2000 series, aluminum manganese alloys of the AA3000 series, aluminum-magnesium alloys of the AA5000 series, aluminum-zinc alloys of the AA7000 series, and aluminum-magnesium-silicon alloys of the AA6000 series are preferred. Some particularly preferred alloys are AA2024 aluminum-copper, AA5182 aluminum alloy, AA7075 aluminum-zinc, and AA6013 aluminum-magnesium-silicon. When improved corrosion resistance is desired, a sheet of AA5052 alloy or AA5024, AA5083 or AA5182 alloy may be included in the laminate. The laminates may also comprise metal sheets of a different alloy. Other useful alloys comprise aluminum-lithium alloys, such as AA2090, AA2098, and AA2198 alloys.

The adhesive layers are in preferred embodiments provided with reinforcing fibers, which fibers preferably bridge the splice lines and metal sheet edge overlaps and therefore are continuous across the splicing region. The reinforcing fibers may be oriented in one direction or in several different directions, depending on the loading conditions of the laminate structure. At least half of the reinforcing fibers preferably extend perpendicular to splice lines and/or lines of overlapping metal sheet edges. Preferred reinforcing fibers comprise continuous fibers made of glass, aromatic polyamides ("aramids") and copolymers, carbon, and/or polymeric fibers such as PBO for instance. Preferred glass fibers include S-2, S-3 and/or R-glass fibers, as well as carbonized silicate glass fibers, although E-glass fibers are also suitable. Preferred fibers have a modulus of elasticity of between 60 and 650 GPa, and an elongation at break of between 0.1 and 8%, preferably above 1.6%, more preferably above 2.0%, and most preferably above 3.0%

The adhesive layers preferably comprise synthetic polymers. Suitable examples of thermosetting polymers include epoxy resins, unsaturated polyester resins, vinyl ester resins, and phenolic resins. Suitable thermoplastic polymers include polyarylates (PAR), polysulphones (PSO), polyether sulphones (PES), polyether imides (PEI), polyphenylene ethers (PEE), polyphenylene sulphide (PPS), polyamide-4,6, polyketone sulphide (PKS), polyether ketones (PEK), polyether ether ketone (PEEK), polyether ketoneketone (PEKK), and others. The laminate may be provided with additional adhesive in certain areas, apart from the adhesive present in the adhesive layers. The thickness of the adhesive layers may be similar to that of the metal sheets but adhesive layers in the laminate are preferably thinner. The adhesive layers between the metal layers are preferably thinner than 1.5 mm, more preferably have a thickness between 0.1 and 0.9 mm, and most preferably between 0.1 and 0.6 mm.

The reinforcing fibers may be provided in prepregs, an intermediate product of reinforcing fibers embedded in a partly cured thermosetting resin or in a thermoplastic polymer. Typically fiber volume fractions range from 25 to 75%, and more preferably from 30 to 65% of the total volume of adhesive and reinforcing fiber in the adhesive layers. The effective fiber volume fraction in an adhesive layer may be lowered by adding plain adhesive layers to reinforced adhesive layers.

The invention further relates to a method for manufacturing a laminate in accordance with the invention, The method comprises the steps of providing a forming substrate with an upper surface; providing a splice strap on the upper surface of the forming substrate, the splice strap extending over part of the forming substrate in a length direction across a splicing region; providing a stack of at least one adhesive layer and metal sheets, of which edges extend along the length direction and abut and/or overlap within the splicing region, the stack extending beyond the boundaries of the splice strap; the splice strap having a smaller thickness than a thickness of a metal sheet, positioned adjacent to the splice strap in the stack; and applying heat and pressure to the thus obtained stack.

In an embodiment of the method, metal sheets deform across the splicing region during the application of heat and pressure, and the deformed shape is consolidated. The shape may be consolidated by curing the thermosetting resin in the adhesive layers, or by lowering the temperature below the melt temperature of a thermoplastic polymer in case such polymer is used in the adhesive layers. According to a preferred embodiment, the metal sheets will bend towards the splice strap. The metal sheets may be deformed elastically (below the elastic limit) and/or may be deformed plastically (beyond the plastic limit). Which type of deformation prevails depends on the type of metal used, on shape and dimensions, on manufacturing conditions, and more.

The method advantageously exploits the relatively low bending stiffness of the laminate in unconsolidated state, i.e. in the state prior to the application of heat and pressure. According to embodiments of the method, a metal sheet is forced to take on the shape of a part of the stack adjacent to said metal sheet. Typically, metal sheets are deformed in the splicing region over a distance in the thickness direction of about the same order of magnitude as the thickness of the splice strap and/or the thickness of an adhesive layer and a metal sheet in case of overlapping metal sheet edges.

According to another embodiment of the invention, the upper surface of the forming substrate comprises a recess across the splicing region for accommodating the splice strap, and the splice strap is provided in said recess, whereby a thickness of the recess ranges from 0% to more than 100% of the splice strap thickness. In an embodiment wherein the recess thickness is larger than 100% of the splice strap thickness, the larger part of the thickness preferably comprises adhesive.

Other preferred embodiments of the method are provided wherein the thickness of the recess ranges from 10% to 60% of the splice strap thickness, and/or wherein the recess has a thickness that varies in a cross direction perpendicular to the length direction. A more preferred embodiment provide a method wherein the thickness of the recess varies in a continuous fashion from 0 outside the splicing region to the thickness of the splice strap within the splicing region. In the latter embodiment, the splice strap thickness may be equal to or even larger than the (adjacent) metal sheet thickness.

Further preferred embodiments relate to methods wherein a second splice strap is provided in the stack, the second splice strap extending in the length direction across said splicing region and/or wherein the second splice strap is positioned adjacent to said adjacent metal sheet and at a side of said adjacent metal sheet that is opposite to the side facing the forming substrate.

Another useful embodiment of the method according to the invention provides a splice strap comprising stacked layers of fiber-reinforced adhesive. Several of such layers are preferably applied to the forming substrate on top of each other to build up thickness, with the proviso that the total build up thickness in this embodiment is defined as the thickness of the splice strap.

Another aspect of the invention finally relates to a structural component for a vehicle, spacecraft, or aircraft, comprising a laminate according to one of the described embodiments, and in particular to an aircraft comprising such a laminate.

### BRIEF DESCRIPTION OF THE FIGURES

The invention will now be further elucidated on the basis of the exemplary embodiments shown in the figures, without however being limited thereto. The same or similar elements in the figures may be denoted by the same or similar reference signs. In the figures:
Figure 1 - is a view in perspective of a fiber-metal laminate according to the state of the art;
Figure 2 - is a view in perspective of a fiber-metal laminate according to the state of the art;
Figure 3 - is a cross-sectional view in a transverse direction of a fiber-metal laminate according to an embodiment of the present invention;
Figure 4 - is a cross-sectional view in a transverse direction of a fiber-metal laminate according to another embodiment of the present invention;
Figure 5 - is a cross-sectional view in a transverse direction of a fiber-metal laminate according to yet another embodiment of the present invention;
Figure 6 - is a cross-sectional view in a transverse direction of a fiber-metal laminate according to yet another embodiment of the present invention;
Figure 7 - is a cross-sectional view in a transverse direction of a fiber-metal laminate according to yet another embodiment of the present invention;
Figure 8 - is a cross-sectional view in a transverse direction of an assembly of a forming substrate and a fiber-metal laminate, illustrating an embodiment of a method for manufacturing the laminate shown in figure 6; and
Figure 9 - is a cross-sectional view in a transverse direction of an assembly of a forming substrate and a fiber-metal laminate, illustrating an embodiment of a method for manufacturing the laminate according to the embodiment shown in figure 4.

### DETAILED DESCRIPTION OF EXEMPLARY EMBODIMENTS

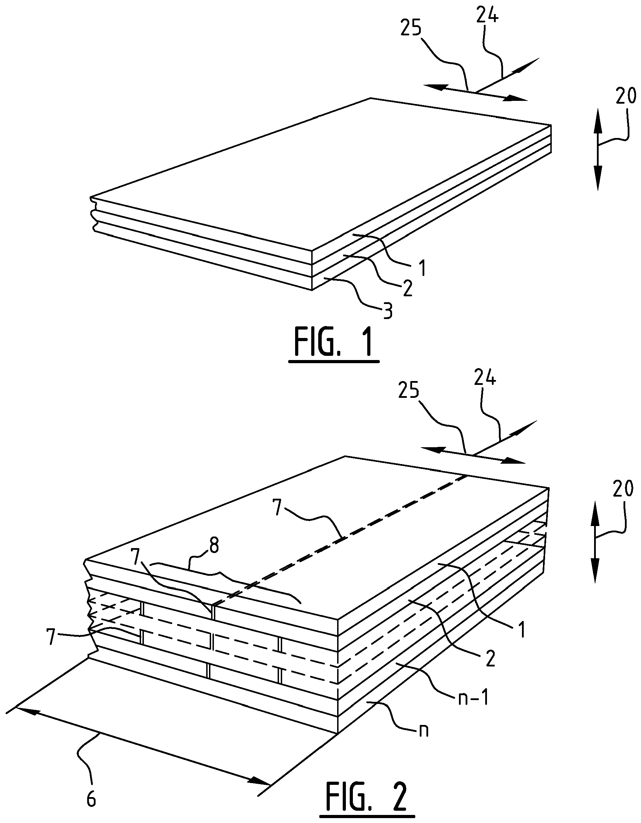

With reference to figure 1, a fiber-metal laminate according to the state of the art is shown. The laminate has a total number of three layers, of which layers 1 and 3 comprise a metal layer and layer 2 comprises a fiber-reinforced adhesive layer. Alternatively, layer 1 and 3 may comprise a fiber-reinforced adhesive layer and layer 2 a metal layer. Layers 1 and 3 may comprise the same metal alloy or may be built from a different kind of metal alloy. The fiber-reinforced adhesive layers may contain fibers in multiple directions as well as different fiber types. The laminate is typically built by providing a forming substrate, providing a first layer 3 on the forming substrate and stacking layers 2 and 1 on top of layer 3 to produce a stack of layers 1-3, which stack is then consolidated under the application of heat and pressure into a cured laminate.

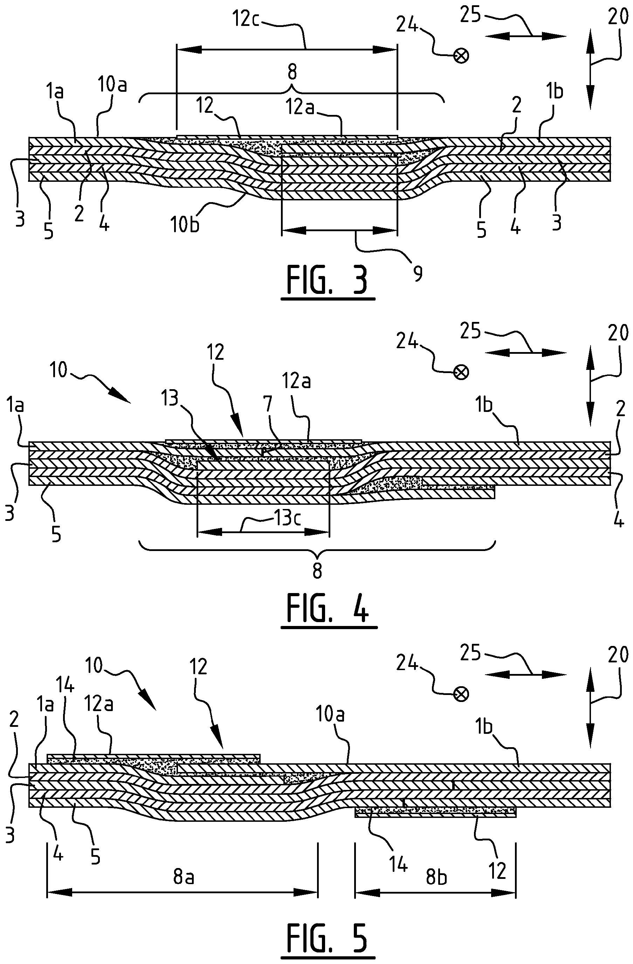

As shown in figure 2, a fiber-metal laminate may comprise more layers up to a layer n, where n may range from 4 to more than 30 for instance. The outer layers 1 and n may be metal layers and/or fiber-reinforced adhesive layers. In the laminate, metal layers generally alternate with fiber-reinforced adhesive layers. Metal layers may be built from one metal sheet having a width in a transverse direction 25 that is sufficiently large to cover the entire width 6 of the laminate. As shown in figure 2, metal sheets may not be available in widths covering the entire width 6 of the laminate, and metal layers may have to be built up of at least two metal sheets with abutting metal sheet edges that form a splice 7, extending along a length direction 24 of the laminate within a splicing region 8 of the laminate (an extension of one splice line only is shown in figure 2 for clarity reasons). As shown in figure 3, the at least two metal sheets may also comprise overlapping edge parts within a splicing region 8.

Referring now to figures 3-7, several embodiments of the invented laminate are shown. The fiber-metal laminate of figure 3 comprises a stack of 2 fiber-reinforced adhesive layers (2, 4) and three metal sheets (1, 3, 5). The metal sheets (1, 3, 5) are bonded to the adhesive layers (2, 4) by the adhesive present in the adhesive layers (2, 4). Outer metal sheet 1 is composed of two metal sheets (1a, 1b), edge parts whereof mutually overlap over a distance 9. The overlapping edges extend along the length direction 24 within a splicing region 8. According to the invention, a splice strap 12 is bonded to the laminate 10 at an outer surface 10a of the laminate 10 and extends in the length direction 24 within or across said splicing region 8. The splice strap 12 is made of metal, in casu an aluminum alloy, and has a smaller thickness than the constant thickness of the metal sheets (1, 3, 5), and in particular of the metal sheet 1b, which is positioned directly adjacent to the splice strap 12 in the stack (1-5). Although thicknesses may vary, an embodiment of the laminate of figure 3 comprises metal sheets of 0.4 mm thickness each, and an aluminum splice strap 12 of 0.2 mm thickness.

As shown in figure 3, an outer surface 12a of the splice strap 12 protrudes from the outer surface 10a of the laminate 10 by an off-set thickness which is about half the thickness of the splice strap 12. The outer surface 10a of the laminate is substantially smooth - apart from the slightly protruded splice strap 12 - and a second outer surface 10b opposite said outer surface 10a is curved. A substantially smooth outer surface 10a is preferred for aircraft components from an aerodynamics point of view. To accommodate the overlapping edge parts of sheets (1a, 1b) as well as the splice strap 12, and still produce a substantially smooth or flat outer surface 10a, may in some embodiments require that metal sheets are deformed in the splicing region 8. In particular, as shown, metal sheets are bent along a line parallel to the length direction 24 towards the splice strap 12 and/or overlapping edge parts. A useful method for manufacturing laminates in accordance with the invention will be elucidated in more detail further below. The splice strap 12 extends over a width 12c which encompasses the splice region. At the left hand of the splice strap 12, the splice strap 12 extends further than the end of layer 1b, whereas at the right hand of the splice strap 12, the splice strap 12 extends equally far as the layer 1a. In other embodiments however, the right side of the splice strap 12 may extend further than the layer 1a.

Another useful embodiment of a fiber-metal laminate 10 is shown in figure 4 and comprises a bonded second splice strap 13 positioned within a stack of 2 fiber-reinforced adhesive layers (2, 4) and three metal sheets (1, 3, 5). The second splice strap extends in the length direction 24 across said splicing region 8, just as a splice strap 12 provided at the outer surface 10 a of the laminate 10 extends in the length direction 24 across said splicing region 8. The respective widths (12c (see figure 3), 13c) of both splice straps (12, 13) need not be the same, as shown. Outer metal sheet 1 is composed of two metal sheets (1a, 1b), edge parts whereof abut to form a splice line 7, extending along the length direction 24 within a splicing region 8. The aluminum splice strap 12 has a smaller thickness than the constant thickness of the metal sheets (1, 3, 5), and in particular of the metal sheets (1a, 1b), which are positioned directly adjacent to the splice strap 12 in the stack (1-5). The second aluminum splice strap 13 is positioned adjacent to the adjacent metal sheets (1a, 1b) but at a side of the adjacent metal sheets (1a, 1b) that is opposite to the outer surface 10a of the laminate 10. The second splice strap 13 in other words is positioned directly below the abutting end parts of metal sheets (1a, 1b), and has a thickness equal to the thickness of the adjacent metal sheets (1a, 1b). Although thicknesses may vary, an embodiment of the laminate of figure 4 comprises metal sheets of 0.6 mm thickness each, an aluminum splice strap 12 of 0.2 mm thickness that protrudes over an off-set thickness of 0.1 mm, and a second splice strap 13 having a thickness of 0.6 mm.

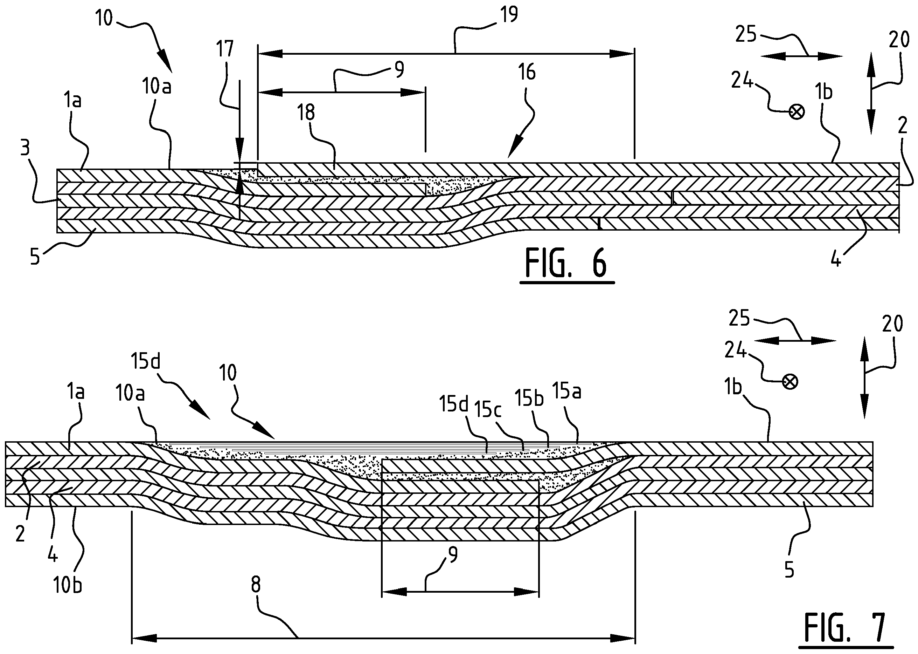

Yet another useful embodiment of a fiber-metal laminate 10 is shown in figure 5. The laminate 10 comprises a splice strap 12 bonded to an outer surface 10a of the laminate, which comprises a stack of 2 fiber-reinforced adhesive layers (2, 4) and three metal sheets (1, 3, 5). Another splice strap 12 is provided at an opposite outer surface 10b and extends in the length direction 24 across a second splicing region 8b, just as a splice strap 12 provided at the outer surface 10 a of the laminate 10 extends in the length direction 24 across a first splicing region 8a. Outer metal sheet 1 is composed of two metal sheets (1a, 1b), an edge part of sheet 1a overlapping with a straight edge part of sheet 1b. The aluminum splice straps 12 have a smaller thickness than the constant thickness of the metal sheets (1, 3, 5), and in particular of the metal sheets 1b and 5, which sheets are positioned directly adjacent to the splice straps 12 in the stack (1-5). In this embodiment, an outer surface 12a of both splice straps 12 protrudes from the outer surfaces 10a with an off-set thickness that is more than 100 % of the strap 12 thickness. Indeed, as shown, an additional adhesive layer 14 is provided between the splice straps 12 and the outer surface 10a of the laminate 10. Although thicknesses may vary, an embodiment of the laminate of figure 5 comprises metal sheets of 0.8 mm thickness each, an aluminum splice strap 12 of 0.2 mm thickness that protrudes over an off-set thickness of about 0.3 mm. Yet another useful embodiment is shown in figure 7 in which a fiber-metal laminate 10 comprises a stack of 2 fiber-reinforced adhesive layers (2, 4) and three metal sheets (1, 3, 5). The metal sheets (1, 3, 5) are bonded to the adhesive layers (2, 4) by the adhesive present in the adhesive layers (2, 4). Outer metal sheet 1 is composed of two metal sheets (1a, 1b), edge parts whereof mutually overlap over a distance 9. The overlapping edges extend along the length direction 24 within a splicing region 8. According to the invention, the laminate 10 is provided with a splice strap 15 at an outer surface 10a of the laminate 10 and extends in the length direction 24 within or across said splicing region 8. The splice strap 15 in the embodiment shown comprises stacked layers (15a, 15b, 15c, 15d) of fiber-reinforced adhesive, the total thickness thereof is smaller than the constant thickness of the metal sheets (1, 3, 5), and in particular of the metal sheet 1b, which is positioned directly adjacent to the splice strap 15 in the stack (1-5). The layers (15a, 15b, 15c, 15d) of splice strap 15 each have a width across the splicing region 8 and the width of the layers (15a, 15b, 15c, 15d) is seen to decrease in the thickness direction 20 of the laminate 10 from the outer laminate surface 10a towards an inner laminate surface, or second outer surface 10b.

Another embodiment of the invention finally is shown in figure 6 and provides a laminate wherein one of the metal sheets in the laminate 10 functions as a splice strap. As shown, the laminate 10 comprises a stack of 2 fiber-reinforced adhesive layers (2, 4) and three metal sheets (1, 3, 5). Outer metal sheet 1 is composed of two metal sheets (1a, 1b), an edge part of sheet 1a overlapping with a straight edge part of sheet 1b over a distance 9. An outer surface 16 of the metal sheet 1b that outside the splicing region 8 forms the outer surface of the laminate 10 gradually protrudes from the outer surface 10 a of the laminate to reach a final off-set thickness 17 at an end of the metal sheet 1b. This will provide a ridge that extends in the length direction 24 of the laminate 10. According to the invention, the protruding part 18 of the metal sheet 1b in the splicing region 8 acts as splice strap 18, the thickness of the splice strap 18 being defined as the largest off-set thickness occurring, which in the present case corresponds to the final off-set thickness 17. Please note that the actual thickness of the splice strap 18 in the present embodiment is as large as the thickness of the adjacent metal sheet 1a in the stack (1-5). The transverse distance 19 over which the metal sheet 1b is gradually bent outwards to produce the offset thickness 17 can be chosen within a large range. A preferred distance is at least 10 times the thickness of the metal sheet 1b. Another useful embodiment (not shown) may in addition to sheet 1b comprise the metal sheet 1a, an outer surface of which gradually protrudes from the outer surface 10 a of the laminate to reach the final off-set thickness 17 at an end of the metal sheet 1a. The ends of sheets 1a and 1b in this embodiment preferably form closely abutting edges.

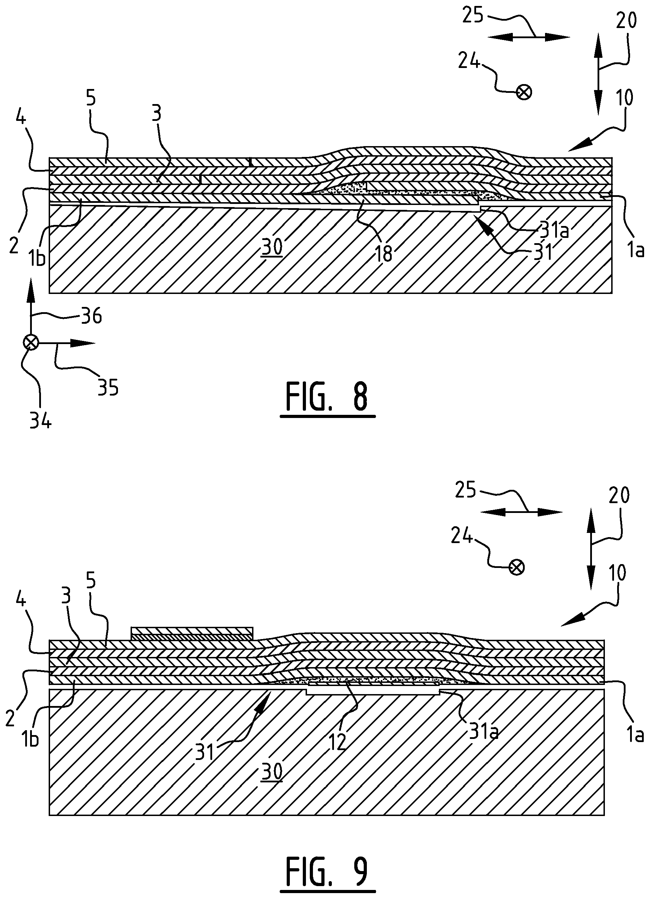

Embodiments of the method for making a laminate 10 in accordance with the present invention is illustrated in figures 8 and 9. In figure 8 , a method is illustrated for making a laminate as shown in figure 6, whereas figure 9 shows a method for making a laminate as shown in figures 3 or 4. The method comprises providing a forming substrate 30 extending in a transverse direction 35, a thickness direction 36 and a length direction 34, and provided with a shape defining upper surface 31. The upper surface 31 of the forming substrate 30 comprises a recess 31a which extends in the length direction 34 of the forming substrate 30 across a splicing region for accommodating a splice strap (12, 18). In figure 8, the recess gradually builds up from an upper surface 31 outside the splicing region to achieve a final recess depth 31a at a discontinuous end line. The shape of the recess 31 mirrors the shape of the protruded part 18 of the metal sheet 1b of the laminate 10 of figure 6. In figure 9, the recess is provided in the upper surface 31 as a constant thickness trough 31a, which of course mirrors the shape of the splice strap 12 of the laminate of figures 3 or 4.

In the embodiment of figure 8, a first metal sheet 1b is then provided onto the tapered upper surface 31 of the forming substrate 30 such that an end part 18 thereof abuts against the upstanding end wall of the recess 31a. In the embodiment of figure 9, a metal or fiber-reinforced adhesive splice strap 12 is provided on the upper surface of the recess 31a within the confines of the recess 31a, the first metal sheet 1b and the splice strap 12 extending over part of the forming substrate 30 in the length direction 34 across a splicing region. A stack of three metal sheets (1, 3, 5) and two adhesive layers (2, 4) is then applied on top of the first metal sheet 1b (figure 8) or the splice strap 12 (figure 9). Edges of the metal sheets (1, 3, 5) extend along the length direction 34 and abut and/or overlap within the splicing region, and the stack (1-5) extends beyond the boundaries of the splice strap 12 or tapered metals sheet section 18. Heat and pressure are then applied to the thus obtained stack (1-5), in which process metal sheets (1a, 1b, 3, 5) deform across the splicing region. The deformed shape is then consolidated by curing a thermosetting adhesive in the fiber-reinforced adhesive layers (2, 4), or by cooling down a thermoplastic adhesive in the fiber-reinforced adhesive layers (2, 4). As shown, the metal sheets (1, 3, 5) are elastically bent over the splice strap 12 (figure 9) or first metals sheet portion 18, since metal sheets (1, 3, 5) are forced to take on the shape of the splice strap 12 or first metal sheet portion 18, provided in the recess 31a of forming substrate 30.

Heating and applying pressure may be achieved in a press or alternatively using an autoclave. Conventional pressure and heat levels may be used, for instance 4-10 bar at 120-175°C. The splice straps 12 and metal sheets (1a, 1b) may if desired be subjected to a degreasing treatment followed by etching or anodizing, and a primer may be applied onto the surface of the forming substrate. Although the forming substrate in the examples has a substantially flat upper surface, it does not need to be flat, and may for instance be shaped as the mirror image of a single- or double-curved body panel for an aircraft, or may have other shapes. The laminate is in particular applied in structural components for a vehicle spacecraft, or aircraft.

## Claims

1. A laminate comprising a stack of mutually bonded adhesive layers and metal sheets, the laminate comprising abutting and/or overlapping metal sheet edges, extending along a length direction within a splicing region, wherein a splice strap is bonded to the laminate at an outer surface of the laminate and extends in the length direction across said splicing region, the splice strap having a smaller thickness than a thickness of a metal sheet, positioned adjacent to the splice strap in the stack.

2. Laminate according to claim 1, wherein the splice strap thickness ranges from 10% to 75% of said adjacent metal sheet thickness.

3. Laminate according to any one of the preceding claims, wherein an outer surface of the splice strap protrudes from the outer surface of the laminate by an off-set thickness ranging from 0% to more than 100% of the splice strap thickness.

4. Laminate according to any one of the preceding claims, further comprising a bonded second splice strap extending in the length direction across said splicing region and positioned within the stack.

5. Laminate according to any one of the preceding claims, wherein the splice strap comprises stacked layers of fiber-reinforced adhesive, stacked layers of metal sheets, or a combination of stacked layers of fibre reinforced adhesive and metal sheets, each metal sheet having a smaller thickness than the thickness of said adjacent metal sheet of the laminate.

6. Laminate according to claim 5, wherein the layers of the strap are staggered on each side of the layer by a length of at least 5 times the thickness of the smallest adjacent metal sheet and more preferably by a length of at least 10 times the thickness of the smallest adjacent metal sheet.

7. Laminate according to any one of claims 5-6, wherein the splice strap layers each have a width across the splicing region and the width of the layers decreases in the thickness direction of the laminate from the outer laminate surface towards an inner laminate surface.

8. Laminate according to any one of the preceding claims, wherein the outer surface of the laminate is substantially smooth and a second outer surface opposite said outer surface is curved.

9. Laminate according to any one of the preceding claims, wherein the adhesive layers comprise reinforcing fibers to form a fiber-metal laminate.

10. Method for making a laminate in accordance with any one of the preceding claims, the method comprising the steps of:
- providing a forming substrate with an upper surface,
- providing a splice strap on the upper surface of the forming substrate, the splice strap extending over part of the forming substrate in a length direction across a splicing region;
- providing a stack of at least one adhesive layer and metal sheets, of which edges extend along the length direction and abut and/or overlap within the splicing region, the stack extending beyond the boundaries of the splice strap; and
- the splice strap having a smaller thickness than a thickness of a metal sheet, positioned adjacent to the splice strap in the stack;
- applying heat and pressure to the thus obtained stack.

11. Method according to claim 10, wherein the splice strap comprises stacked layers of fiber-reinforced adhesive.

12. Method according to any one of claims 10-11, wherein during applying heat and pressure, metal sheets deform across the splicing region and the deformed shape is consolidated.

13. Method according to any one of claims 10-12, wherein the adhesive layers comprise reinforcing fibers, either applied with the adhesive layers or provided as a prepreg.

14. Structural component for a vehicle, spacecraft, or aircraft, comprising a laminate according to any one of claims 1-9.

15. Aircraft comprising a laminate according to any one of claims 1-9.

## Patentansprüche

1. Laminat, das ein Stapel von gegenseitig verklebten Haftschichten und Metallschichten aufweist, wobei das Laminat aneinander anstoßende und/oder überlappende Metallblechkanten aufweist, die entlang einer Längenrichtung in einem Verklebungsgebiet verlaufen, wobei ein Verklebungsstreifen am Laminat an einer Außenfläche des Laminats angeklebt ist und in der Längenrichtung quer zum Verklebungsgebiet verläuft, wobei der Verklebungsstreifen eine geringere Dicke als eine Dicke eines Metallblechs hat, das angrenzend an den Verklebungsstreifen im Stapel angeordnet ist.

2. Laminat nach Anspruch 1, wobei die Dicke des Verklebungsstreifens zwischen 10 % bis 75 % der Dicke des angrenzenden Metallblechs liegt.

3. Laminat nach einem der vorhergehenden Ansprüche, wobei eine Außenfläche des Verklebungsstreifens von einer Außenfläche des Laminats um eine versetzte Dicke hervorsteht, die von 0 % bis zu über 100 % der Dicke des Verklebungsstreifens liegt.

4. Laminat nach einem der vorhergehenden Ansprüche, das weiterhin einen geklebten zweiten Verklebungsstreifen aufweist, der in der Längenrichtung über das Verklebungsgebiet verläuft und im Stapel angeordnet ist.

5. Laminat nach einem der vorhergehenden Ansprüche, wobei der Verklebungsstreifen gestapelte Schichten von faserverstärkten haftenden, gestapelten Schichten von Metallblechen aufweist oder eine Kombination aus gestapelten Schichten von faserverstärkten Haft- und Metallflächen, wobei jedes Metallblech eine kleinere Dicke als die Dicke des angrenzenden Metallblechs des Laminats hat.

6. Laminat nach Anspruch 5, wobei die Schichten des Streifens an jeder Seite der Schicht in einer Länge von wenigstens 5 Mal der Dicke des kleinsten angrenzenden Metallblechs gestapelt sind und bevorzugter um eine Länge von wenigstens 10 mal der Dicke des kleinsten angrenzenden Metallblechs.

7. Laminat nach einem der Ansprüche 5 bis 6, wobei die Verklebungsstreifenschichten jeweils eine Breite über das Verklebungsgebiet haben und die Breite der Schichten in der Dickenrichtung des Laminats von der äußeren Laminatfläche in Richtung einer inneren Laminatfläche abnimmt.

8. Laminat nach einem der vorhergehenden Ansprüche, wobei die Außenfläche des Laminats im Wesentlichen eben ist und eine zweite Außenfläche gegenüberliegend dieser Außenfläche gekrümmt ist.

9. Laminat nach einem der vorhergehenden Ansprüche, wobei die Haftschichten Verstärkungsfasern aufweisen, um ein Faser-Metall-Laminat zu bilden.

10. Verfahren zum Herstellen eines Laminats gemäß einem beliebigen der vorhergehenden Ansprüche, wobei das Verfahren die Schritte aufweist:
- Vorsehen eines formenden Substrats mit einer Oberfläche,
- Vorsehen eines Verklebungsstreifens auf der Oberfläche des formenden Substrats, wobei der Verklebungsstreifens über einen Teil des formenden Substrats in einer Längenrichtung über ein Verklebungsgebiet verläuft;
- Vorsehen eine Stapels von wenigstens einer Haftschicht und Metallblechen, von denen Kanten entlang der Längsrichtung verlaufen und im Verklebungsgebiet anliegen und/oder überlappen, wobei der Stapel über die Grenzen des Verklebungsstreifens hinaus verläuft; und
- der Verklebungsstreifen eine kleinere Dicke als eine Dicke eines Metallblechs hat, das angrenzend an den Verklebungsstreifen im Stapel angeordnet ist;
- Anwenden von Wärme und Druck auf den somit gewonnenen Stapel.

11. Verfahren nach Anspruch 10, wobei der Verklebungsstreifen gestapelte Schichten aus faserverstärktem Haftmaterial aufweist.

12. Verfahren nach einem der Ansprüche 10-11, wobei während des Anwendens von Wärme und Druck Metallbleche sich über das Verklebungsgebiet verformen und die verformte Form verfestigt wird.

13. Verfahren nach einem der Ansprüche 10-12, wobei die Haftschichten Verstärkungsfasern aufweisen, die entweder mit den Haftschichten aufgetragen werden oder als Prepreg vorgesehen werden.

14. Strukturkomponente für ein Fahrzeug, ein Raumschiff oder ein Flugzeug, das ein Laminat gemäß einem der Ansprüche 1 bis 9 aufweist.

15. Flugzeug, das ein Laminat nach einem der Ansprüche 1 bis 9 aufweist.

## Revendications

1. Stratifié comprenant un empilement de couches d'adhésif et de feuilles de métal mutuellement liées, le stratifié comprenant des bords de feuille de métal chevauchants et/ou contigus, s'étendant suivant une direction de longueur au sein d'une région de jonction par recouvrement, dans lequel une bande de joint de recouvrement est liée au stratifié au niveau d'une surface extérieure du stratifié et s'étend dans la direction de longueur à travers ladite région de jonction par recouvrement, la bande de joint de recouvrement ayant une épaisseur plus petite qu'une épaisseur d'une feuille de métal, positionnée adjacente à la bande de joint de recouvrement dans l'empilement.

2. Stratifié selon la revendication 1, dans lequel l'épaisseur de la bande de joint de recouvrement varie de 10 % à 75 % de ladite épaisseur de feuille de métal adjacente.

3. Stratifié selon l'une quelconque des revendications précédentes, dans lequel une surface extérieure de la bande de joint de recouvrement fait saillie depuis la surface extérieure du stratifié d'une épaisseur de décalage variant de 0 % à plus de 100 % de l'épaisseur de bande de joint de recouvrement.

4. Stratifié selon l'une quelconque des revendications précédentes, comprenant en outre une seconde bande de joint de recouvrement liée s'étendant dans la direction de longueur à travers ladite région de jonction par recouvrement et positionnée au sein de l'empilement.

5. Stratifié selon l'une quelconque des revendications précédentes, dans lequel la bande de joint de recouvrement comprend des couches empilées d'adhésif renforcé de fibres, des couches empilées de feuilles de métal, ou une combinaison de couches empilées d'adhésif renforcé de fibres et de feuilles de métal, chaque feuille de métal ayant une épaisseur plus petite que l'épaisseur de ladite feuille de métal adjacente du stratifié.

6. Stratifié selon la revendication 5, dans lequel les couches de la bande sont en quinconce de chaque côté de la couche d'une longueur d'au moins 5 fois l'épaisseur de la feuille de métal adjacente la plus petite et de manière davantage préférée d'une longueur d'au moins 10 fois l'épaisseur de la feuille de métal adjacente la plus petite.

7. Stratifié selon l'une quelconque des revendications 5 et 6, dans lequel les couches de bande de joint de recouvrement ont chacune une largeur à travers la région de jonction par recouvrement et la largeur des couches diminue dans la direction d'épaisseur du stratifié depuis la surface de stratifié extérieure vers une surface de stratifié intérieure.

8. Stratifié selon l'une quelconque des revendications précédentes, dans lequel la surface extérieure du stratifié est sensiblement lisse et une seconde surface extérieure opposée à ladite surface extérieure est incurvée.

9. Stratifié selon l'une quelconque des revendications précédentes, dans lequel les couches d'adhésif comprennent des fibres de renforcement pour former un stratifié en fibres-métal.

10. Procédé de réalisation d'un stratifié selon l'une quelconque des revendications précédentes, le procédé comprenant les étapes de :
- fourniture d'un substrat de formation pourvu d'une surface supérieure,
- fourniture d'une bande de joint de recouvrement sur la surface supérieure du substrat de formation, la bande de joint de recouvrement s'étendant sur une partie du substrat de formation dans une direction de longueur à travers une région de jonction par recouvrement ;
- fourniture d'un empilement d'au moins une couche d'adhésif et de feuilles de métal, dont les bords s'étendent suivant la direction de longueur et sont contigus et/ou se chevauchent au sein de la région de jonction par recouvrement, l'empilement s'étendant au-delà des limites de la bande de joint de recouvrement ; et
- la bande de joint de recouvrement ayant une épaisseur plus petite qu'une épaisseur d'une feuille de métal, positionnée adjacente à la bande de joint de recouvrement dans l'empilement ;
- application de chaleur et de pression à l'empilement ainsi obtenu.

11. Procédé selon la revendication 10, dans lequel la bande de joint de recouvrement comprend des couches empilées d'adhésif renforcé de fibres.

12. Procédé selon l'une quelconque des revendications 10 et 11, dans lequel durant l'application de chaleur et de pression, des feuilles de métal se déforment à travers la région de jonction par recouvrement et la forme déformée est consolidée.

13. Procédé selon l'une quelconque des revendications 10 à 12, dans lequel les couches d'adhésif comprennent des fibres de renforcement, soit appliquées avec les couches d'adhésif, soit fournies sous forme de préimprégné.

14. Composant structurel pour un véhicule, un engin spatial ou un aéronef, comprenant un stratifié selon l'une quelconque des revendications 1 à 9.

15. Aéronef comprenant un stratifié selon l'une quelconque des revendications 1 à 9.
